# EUROPEAN PATENT APPLICATION

(11) **EP 4 391 638 A1**
(43) Date of publication of application: **26.06.2024**
(21) Application number: 22866516.2
(22) Date of filing: 01.09.2022
(51) Int. Cl.: H04W 28/02

(54) **DATA TRANSMISSION METHOD AND APPARATUS**

(30) Priority: 07.09.2021 CN 202111045932
(71) Applicant: Huawei Technologies Co., Ltd., Shenzhen, Guangdong 518129 (CN)
(72) Inventor: FAN, Qiang, Shenzhen, Guangdong 518129 (CN); XU, Xiaoying, Shenzhen, Guangdong 518129 (CN)
(74) Representative: Grünecker Patent- und Rechtsanwälte PartG mbB
(86) International application number: PCT/CN2022/116618
(87) International publication number: WO 2023/036052

(57) **Abstract**

Embodiments of this application provide a data transmission method and an apparatus. A first access network device receives first indication information from a core network device. The first indication information indicates that a first quality of service QoS flow of a first terminal device has an association relationship with a second QoS flow of a second terminal device. The first access network device schedules, based on the first indication information, data transmission of the first terminal device and the second terminal device. By using the method, the first access network device can obtain, from the core network device, QoS flows that have an association relationship. When a data packet loss or a transmission failure occurs in a QoS flow, the first access network device can improve reliability of data transmission in a QoS flow that has an association relationship with the QoS flow, so that a service shutdown caused by expiration of survival time can be avoided, and service reliability is improved.

## Description

### TECHNICAL FIELD

Embodiments of this application relate to the wireless communication field, and in particular, to a data transmission method and an apparatus.

### BACKGROUND

In an industrial control scenario, a wired industrial internet (industrial Internet of things, IIoT) is usually deployed to control a production line. For example, a wired latency sensitive network (time sensitive network, TSN) is deployed to control the production line. However, this method has some inherent disadvantages, for example, high cable deployment costs, a security risk, and low flexibility. To resolve the foregoing disadvantages, a solution of applying a 5G system (5th generation system, 5GS) to a TSN is proposed in the 3rd Generation Partnership Project (3rd Generation Partnership Project, 3GPP). The 5GS is applied to the TSN as a TSN bridge device. A data packet of the TSN may be transmitted by using the 5GS.

### SUMMARY

This application provides a data transmission method and an apparatus, to improve reliability of data transmission.

According to a first aspect, this application provides a data transmission method, and the method is performed by a first access network device. The first access network device receives first indication information from a core network device. The first indication information indicates that a first quality of service QoS flow of a first terminal device has an association relationship with a second QoS flow of a second terminal device. The first access network device serves the first terminal device and the second terminal device. The first QoS flow belongs to a first protocol data unit PDU session, and the second QoS flow belongs to a second PDU session. The first access network device schedules, based on the first indication information, data transmission of the first terminal device and the second terminal device.

By using the method described in the first aspect, the first access network device can determine, based on the first indication information obtained from the core network device, that there are QoS flows with an association relationship in the first terminal device and the second terminal device. When a data packet loss or a transmission failure occurs in a QoS flow, the first access network device not only improves reliability of data transmission in the QoS flow, but also improves reliability of data transmission in a QoS flow having an association relationship with the QoS flow. In this way, when the transmission failure is detected, the access network device and the terminal devices can transmit data in a more robust transmission manner, so that a service shutdown caused by expiration of survival time can be avoided, and service reliability is improved.

In a possible implementation of the first aspect, the first indication information includes identification information of the first QoS flow and identification information of the second QoS flow, and the method further includes: The first access network device receives, from the core network device, configuration information of the first QoS flow and configuration information of the second QoS flow.

In a possible implementation of the first aspect, the identification information of the first QoS flow is a quality of service flow identifier QFI, and the identification information of the second QoS flow is a QFI.

In a possible implementation of the first aspect, the first indication information includes configuration information of the first QoS flow and a QFI of the second QoS flow.

In a possible implementation of the first aspect, the first indication information includes an identifier of the first PDU session and an identifier of the second PDU session, and the method further includes: The first access network device receives, from the core network device, configuration information of the first QoS flow and configuration information of the second QoS flow, where a QFI of the first QoS flow is the same as a QFI of the second QoS flow.

In a possible implementation of the first aspect, the first indication information includes configuration information of the first PDU session and an identifier of the second PDU session, and a QFI of the first QoS flow is the same as a QFI of the second QoS flow.

In a possible implementation of the first aspect, the first indication information includes an identifier of the first terminal device and an identifier of the second terminal device.

In a possible implementation of the first aspect, the first access network device receives, from the core network device, configuration information of the first QoS flow and configuration information of the second QoS flow. A QFI of the first QoS flow is the same as a QFI of the second QoS flow, and an identifier of the first PDU session is the same as an identifier of the second PDU session.

In a possible implementation of the first aspect, the first access network device receives, from the core network device, configuration information of the first QoS flow and configuration information of the second QoS flow. An index value included in the configuration information of the first QoS flow is the same as an index value included in the configuration information of the second QoS flow.

In a possible implementation of the first aspect, the first access network device receives, from the core network device, configuration information of the first PDU session and configuration information of the second PDU session. An index value included in the configuration information of the first PDU session is the same as an index value included in the configuration information of the second PDU session, and a QFI of the first QoS flow is the same as a QFI of the second QoS flow.

In a possible implementation of the first aspect, the first access network device receives, from the core network device, configuration information of the first PDU session and configuration information of the second PDU session. The configuration information of the first PDU session includes configuration information of the first QoS flow, and the configuration information of the second PDU session includes configuration information of the second QoS flow. An index value included in the configuration information of the first PDU session is the same as an index value included in the configuration information of the second PDU session, and an index value included in the configuration information of the first QoS flow is the same as an index value included in the configuration information of the second QoS flow.

In a possible implementation of the first aspect, the first indication information includes configuration information of the first QoS flow and configuration information of the second QoS flow. An index value included in the configuration information of the first QoS flow is the same as an index value included in the configuration information of the second QoS flow.

In a possible implementation of the first aspect, the first indication information includes configuration information of the first PDU session and configuration information of the second PDU session. An index value included in the configuration information of the first PDU session is the same as an index value included in the configuration information of the second PDU session, and a QFI of the first QoS flow is the same as a QFI of the second QoS flow.

In a possible implementation of the first aspect, the first indication information includes configuration information of the first PDU session and configuration information of the second PDU session. The configuration information of the first PDU session includes configuration information of the first QoS flow, and the configuration information of the second PDU session includes configuration information of the second QoS flow. An index value included in the configuration information of the first PDU session is the same as an index value included in the configuration information of the second PDU session, and an index value included in the configuration information of the first QoS flow is the same as an index value included in the configuration information of the second QoS flow.

In a possible implementation of the first aspect, that a first QoS flow has an association relationship with a second QoS flow specifically includes: a data packet transmitted by using the first QoS flow and a data packet transmitted by using the second QoS flow are different types of data packets that have a same source; a data packet transmitted by using the first QoS flow and a data packet transmitted by using the QoS flow are a same data packet; or a data packet transmitted by using the first QoS flow and a data packet transmitted by using the second QoS flow have same QoS guarantee.

According to a second aspect, this application provides a data transmission method, and the method is performed by a first access network device. The first access network device receives first indication information from a core network device. The first indication information indicates that a first quality of service QoS flow of a first terminal device has an association relationship with a second QoS flow of a second terminal device. The first access network device serves the first terminal device, and a second access network device serves the second terminal device. The first QoS flow belongs to a first protocol data unit PDU session, and the second QoS flow belongs to a second PDU session. The first access network device sends second indication information to the second access network device, where the second indication information indicates that a data packet in the first QoS flow fails to be transmitted.

By using the method described in the first aspect, the first access network device can determine, based on the first indication information obtained from the core network device, that there are QoS flows with an association relationship in the first terminal device and the second terminal device. When a data packet loss or a transmission failure occurs in a QoS flow, the first access network device notifies, to the second access network device, information about a QoS flow on which the transmission failure occurs, or information about a QoS flow that has an association relationship with the QoS flow on which the transmission failure occurs, so that not only reliability of data transmission in the QoS flow is improved, but also reliability of data transmission in the QoS flow that has an association relationship with the QoS flow can be improved. In this case, when the transmission failure is detected, the access network device and the terminal devices can perform data transmission in a more robust transmission manner, so that a service shutdown caused by expiration of survival time can be avoided, and service reliability is improved.

In a possible implementation of the second aspect, the first indication information includes configuration information of the first QoS flow. The first indication information further includes at least one of an identifier of the second QoS flow, an identifier of the second PDU session, an identifier of the second access network device, an identifier of the second terminal device, and a first mark value.

In a possible implementation of the second aspect, that a first QoS flow has an association relationship with a second QoS flow specifically includes: a data packet transmitted by using the first QoS flow and a data packet transmitted by using the second QoS flow are different types of data packets that have a same source; a data packet transmitted by using the first QoS flow and a data packet transmitted by using the second QoS flow are a same data packet; or a data packet transmitted by using the first QoS flow and a data packet transmitted by using the second QoS flow have same QoS guarantee.

According to a third aspect, this application provides a data transmission method, and the method is performed by a first access network device. The first access network device receives first indication information from a core network device. The first indication information indicates that a first quality of service QoS flow of a first terminal device has an association relationship with a third QoS flow. The first access network device schedules, based on the first indication information, data transmission of the first terminal device.

By using the method described in the first aspect, the first access network device can determine, based on the information obtained from the core network device, that the first terminal device has a plurality of QoS flows having an association relationship. When a data packet loss or a transmission failure occurs in a QoS flow, the first access network device not only improves reliability of data transmission in the QoS flow, but also improves reliability of data transmission in a QoS flow having an association relationship with the QoS flow. In this way, when the transmission failure is detected, the access network device and the terminal devices can transmit data in a more robust transmission manner, so that a service shutdown caused by expiration of survival time can be avoided, and service reliability is improved.

In a possible implementation of the third aspect, that the first QoS flow has an association relationship with the third QoS flow specifically includes: a data packet transmitted by using the first QoS flow and a data packet transmitted by using the third QoS flow are different types of data packets that have a same source; a data packet transmitted by using the first QoS flow and a data packet transmitted by using the third QoS flow have same QoS guarantee; or a data packet transmitted by using the first QoS flow and a data packet transmitted by using the third QoS flow are respectively an uplink data packet and a downlink data packet that are of a same service.

According to a fourth aspect, a communication apparatus is provided, including a function module configured to implement the method in the first aspect, any possible implementation of the first aspect, the second aspect, any possible implementation of the second aspect, the third aspect, or any possible implementation of the third aspect.

According to a fifth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in the first aspect, any possible implementation of the first aspect, the second aspect, any possible implementation of the second aspect, the third aspect, or any possible implementation of the third aspect by using a logic circuit or executing code instructions.

According to a sixth aspect, a communication apparatus is provided, including a processor and a memory. The processor is coupled to the memory, and the processor is configured to control the apparatus to implement the method in the first aspect, any possible implementation of the first aspect, the second aspect, any possible implementation of the second aspect, the third aspect, or any possible implementation of the third aspect.

According to a seventh aspect, a computer-readable storage medium is provided. The computer-readable storage medium stores a computer program or instructions. When the computer program or the instructions is or are executed, the method in the first aspect, any possible implementation of the first aspect, the second aspect, any possible implementation of the second aspect, the third aspect, or any possible implementation of the third aspect is implemented.

According to an eighth aspect, a computer program product including instructions is provided. When the instructions are run, the method in the first aspect, any possible implementation of the first aspect, the second aspect, any possible implementation of the second aspect, the third aspect, or any possible implementation of the third aspect is implemented.

According to a ninth aspect, a computer program is provided. The computer program includes code or instructions. When the code or the instructions is or are run, the method in the first aspect, any possible implementation of the first aspect, the second aspect, any possible implementation of the second aspect, the third aspect, or any possible implementation of the third aspect is implemented.

According to a tenth aspect, a chip system is provided. The chip system includes a processor, and may further include a memory, to implement the method in the first aspect, any possible implementation of the first aspect, the second aspect, any possible implementation of the second aspect, the third aspect, or any possible implementation of the third aspect. The chip system may include a chip, or may include a chip and another discrete component.

### BRIEF DESCRIPTION OF DRAWINGS

FIG. 1 is a schematic diagram of a network architecture to which an embodiment of this application is applicable;
FIG. 2a is a diagram of an example of a protocol layer structure between a terminal device and an access network device according to an embodiment of this application;
FIG. 2b is a schematic diagram of a CU-DU split architecture according to an embodiment of this application;
FIG. 2c is a schematic diagram of another CU-DU split architecture according to an embodiment of this application;
FIG. 2d is a schematic diagram of protocol stack distribution according to an embodiment of this application;
FIG. 3 is a schematic diagram of an architecture of a 5G system supporting a TSN network according to an embodiment of this application;
FIG. 4a is a schematic diagram of a QoS model in a 5G communication system according to an embodiment of this application;
FIG. 4b is a schematic diagram of a TSC application scenario according to an embodiment of this application;
FIG. 4c shows an example of a service interruption at an application layer according to an embodiment of this application;
FIG. 5, FIG. 6, and FIG. 7 are schematic flowcharts of data transmission methods according to an embodiment of this application; and
FIG. 8 and FIG. 9 are schematic diagrams of structures of possible communication apparatuses according to an embodiment of this application.

### DESCRIPTION OF EMBODIMENTS

Technical solutions provided in embodiments of this application may be applied to various communication systems, for example, a long term evolution (long term evolution, LTE) system, a 5th generation (5th generation, 5G) mobile communication system, a Wi-Fi system, a future communication system, a system integrating a plurality of communication systems, or the like. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine-type communications (massive machine-type communications, mMTC), device-to-device (device-to-device, D2D), vehicle to everything (vehicle to everything, V2X), vehicle to vehicle (vehicle to vehicle, V2V), internet of things (internet of things, IoT), and the like.

In embodiments of this application, "/" may represent an "or" relationship between associated objects. For example, A/B may represent A or B. A term "and/or" may indicate that there are three relationships between the associated obj ects. For example, A and/or B may represent the following three cases: Only A exists, both A and B exist, and only B exists. A and B may be singular or plural. In embodiments of this application, words such as "first" and "second" may be used to distinguish between technical features with a same or similar function. The words such as "first" and "second" do not limit a quantity and an execution sequence, and the words such as "first" and "second" do not limit a definite difference. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. A word such as "example" or "for example" is used to present a related concept in a specific manner for ease of understanding.

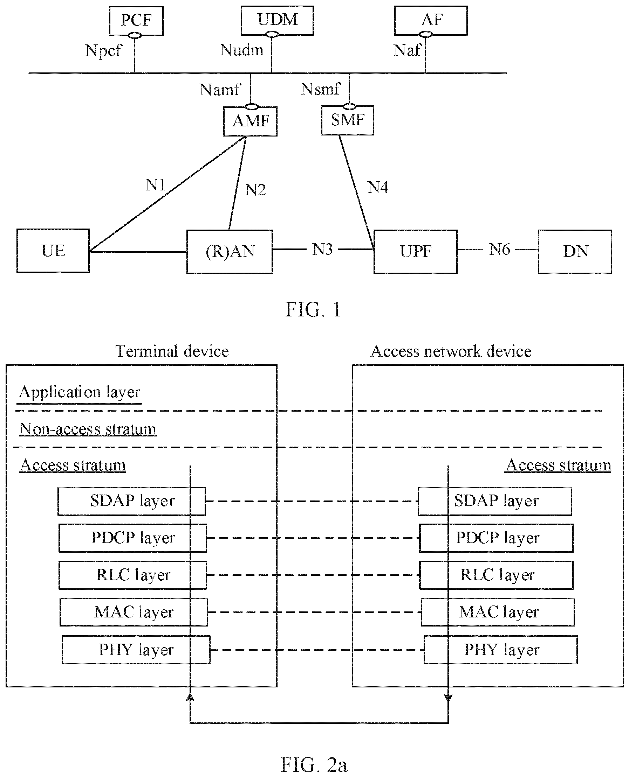

FIG. 1 is a schematic diagram of a network architecture to which an embodiment of this application is applicable. As shown in FIG. 1, a terminal device may access a wireless network, to obtain a service of an external network (for example, a data network (data network, DN)) through the wireless network, or communicate with another device through the wireless network, for example, communicate with another terminal device. Network elements in the wireless network include a radio access network (radio access network, RAN) network element and a core network (core network, CN) network element. ARAN is configured to connect the terminal device to the wireless network, and a CN is configured to manage the terminal device and provide a gateway for communicating with the DN. In embodiments of this application, a device in the RAN may be referred to as an access network device, a device in the CN may be referred to as a core network device, and both the access network device and the core network device may be referred to as network devices. One access network device may provide a service for at least one terminal device. For example, one access network device may provide services for two terminal devices (which is not shown in FIG. 1).

In FIG. 1, Npcf, Nudm, Naf, Namf, Nsmf, N1, N2, N3, N4, and N6 are interface sequence numbers. For meanings of these interface sequence numbers, refer to related standard protocols. This is not limited herein.

It may be understood that a 5G communication system is used as an example in FIG. 1. The solutions in embodiments of this application may alternatively be applied to another possible communication system, for example, a 6th generation (the 6th generation, 6G) communication system. The foregoing network element or function may be a network element in a hardware device, may be a software function run on dedicated hardware, or may be an instantiated virtualization function on a platform (for example, a cloud platform). Optionally, the foregoing network element or function may be implemented by one device, may be jointly implemented by a plurality of devices, or may be a function module in one device. This is not specifically limited in embodiments of this application.

The following separately describes in detail the terminal device, the RAN, the CN, and the DN in FIG. 1.

### 1. Terminal device

The terminal device includes a device that provides voice and/or data connectivity for a user, and may include, for example, a handheld device with a wireless connection function or a processing device connected to a wireless modem. The terminal device may communicate with a core network through a radio access network (radio access network, RAN), and exchange a voice and/or data with the RAN. The terminal device may include a user equipment (user equipment, UE), a wireless terminal device, a mobile terminal device, a device-to-device communication (device-to-device communication, D2D communication) terminal device, a vehicle to everything (vehicle to everything, V2X) terminal device, a machine-to-machine/machine-type communications (machine-to-machine/machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, a user equipment, or the like. For example, the terminal device may include a mobile phone (or referred to as a "cellular" phone), a computer having a mobile terminal device, or a portable, pocket-sized, handheld, or a computer-embedded mobile apparatus. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

### 2. RAN device

An RAN may include one or more RAN devices, and an interface between the RAN device and the terminal device may be a Uu interface (or referred to as an air interface). Certainly, in future communication, names of these interfaces may remain unchanged, or may be replaced with other names. This is not limited in this application.

The RAN device is an access device used by the terminal device to access a mobile communication system in a wireless manner, and may be a base station, an evolved NodeB (evolved NodeB, eNodeB), a transmission reception point (transmission reception point, TRP), a next generation NodeB (next generation NodeB, gNB) in the 5G mobile communication system, a base station in a future mobile communication system, an access node in a Wi-Fi system, or the like. The RAN device may include a central unit (central unit, CU), or a distributed unit (distributed unit, DU), or include the CU and the DU.

In embodiments of this application, functions of the RAN device may alternatively be implemented by using a plurality of network functional entities, and each network functional entity is configured to implement a part of functions of the RAN device. These network functional entities may be network elements in hardware devices, may be software functions run on dedicated hardware, or may be instantiated virtualization functions on a platform (for example, a cloud platform).

### (1) Protocol layer structure

Communication between the RAN device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer.

Data transmission of the access network device and the terminal device is used as an example. The data transmission needs to go through the user plane protocol layer such as the SDAP layer, the PDCP layer, the RLC layer, the MAC layer, and the physical layer. The SDAP layer, the PDCP layer, the RLC layer, the MAC layer, and the physical layer may also be collectively referred to as an access stratum. For example, at least one data radio bearer (data radio bearer, DRB) is established between the access network device and the terminal device for data transmission. Each DRB may correspond to a group of functional entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may alternatively be established between the access network device and the terminal device for signaling transmission. The DRB and the SRB may be collectively referred to as a radio bearer (radio bearer, RB).

Downlink data transmission is used as an example. In FIG. 2a, a downward arrow indicates data sending, and an upward arrow indicates data receiving. After obtaining data from an upper layer, an SDAP layer entity may map the data to a PDCP layer entity of a corresponding DRB based on a quality of service flow identifier (quality of service flow identifier, QFI) of the data. The PDCP layer entity may transmit the data to at least one RLC layer entity corresponding to the PDCP layer entity, and then the at least one RLC layer entity transmits the data to a corresponding MAC layer entity. Then, the MAC layer entity generates a transport block, and a corresponding physical layer entity wirelessly transmits the transport block. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transferred to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

For example, it can be further learned from FIG. 2a that, the terminal device further has an application layer and a non-access stratum. The application layer may be configured to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

### (2) CU and DU

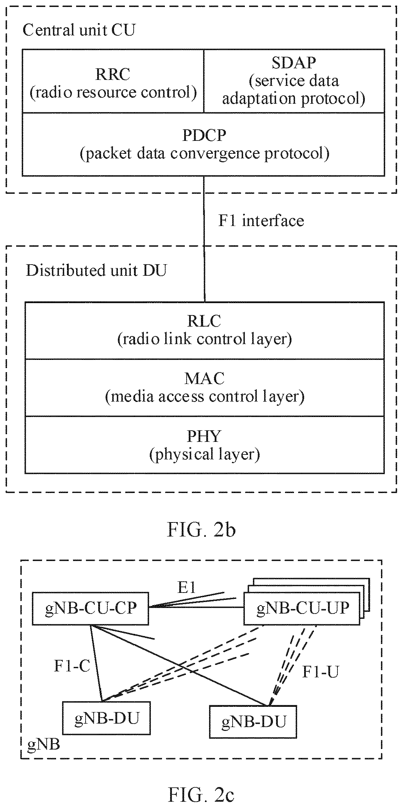

In embodiments of this application, the RAN device may include one or more central units (central unit, CU) and one or more distributed units (distributed unit, DU), and a plurality of DUs may be centrally controlled by one CU. For example, an interface between the CU and the DU may be referred to as an F1 interface. A control plane (control plane, CP) interface may be F 1 - C, and a user plane (user plane, UP) interface may be F 1-U. The CU and the DU may be classified based on protocol layers of the wireless network: For example, as shown in FIG. 2b, functions of the PDCP layer and a protocol layer above the PDCP layer are set on the CU, and a function of a protocol layer below the PDCP layer is set on the DU. For example, the DU may include an RLC layer, a MAC layer, and a physical (Physical, PHY) layer.

In a possible design, the DU may include a function of the RLC layer, a function of the MAC layer, and a part of functions of the PHY layer. For example, the DU may include a function of an upper layer in the PHY layer. The function of the upper layer in the PHY layer may include a cyclic redundancy check (cyclic redundancy check, CRC) function, channel coding, rate matching, scrambling, modulation, and layer mapping. Alternatively, the function of the upper layer in the PHY layer may include cyclic redundancy check, channel coding, rate matching, scrambling, modulation, layer mapping, and precoding. A function of a lower layer in the PHY layer may be implemented by another network entity independent of the DU. The function of the lower layer in the PHY layer may include precoding, resource mapping, physical antenna mapping, and radio frequency functions. Alternatively, the function of the lower layer in the PHY layer may include resource mapping, physical antenna mapping, and radio frequency functions. Function division of the upper layer and the lower layer in the PHY layer is not limited in embodiments of this application. When the function of the lower layer in the PHY layer may be implemented by another network entity independent of the DU, that the DU sends data or information to another communication apparatus (for example, a terminal device or a core network device) may be understood as that the DU performs functions of the RLC layer and the MAC layer, and a part of functions of the PHY layer. For example, after the DU completes the functions of the RLC layer and the MAC layer, and cyclic redundancy check, channel coding, rate matching, scrambling, modulation, and layer mapping, the network entity that is independent of the DU and that performs the function of the lower layer in the PHY layer performs remaining functions of mapping and sending on a physical resource.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into a part of processing functions having protocol layers. In a design, a part of functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on a service type or another system requirement. For example, division may be performed based on a latency. A function whose processing time needs to satisfy a latency requirement is set on the DU, and a function whose processing time does not need to satisfy the latency requirement is set on the CU. In another design, the CU may alternatively have one or more functions of the core network. For example, the CU may be set on a network side for ease of centralized management. The DU may have a plurality of radio frequency functions, or the radio frequency functions may be set remotely. This is not limited in embodiments of this application.

For example, the functions of the CU may be implemented by one entity or different entities. For example, as shown in FIG. 2c, the functions of the CU may be further divided, to be specific, a control plane and a user plane are separated, and are implemented by using different entities: a control plane CU entity (namely, a CU-CP entity) and a user plane CU entity (namely, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

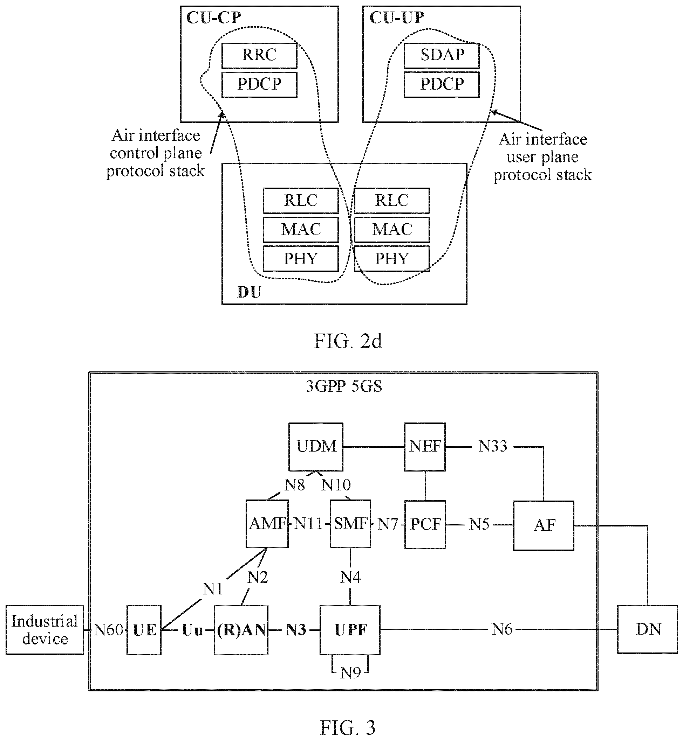

Based on FIG. 2c, FIG. 2d is a schematic diagram of distribution of air interface protocol stacks. As shown in FIG. 2d, for both a user plane and a control plane, the air interface protocol stack may be that an RLC layer, a MAC layer, and a PHY layer are on a DU, and a PDCP layer and protocol layers above the PDCP layer are on a CU.

It should be noted that in the architectures shown in FIG. 2b to FIG. 2d, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and a radio frequency apparatus.

### 3. CN

The CN may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a network exposure function (network exposure function, NEF) network element, a unified data repository (unified data repository, UDR) network element, and the like.

The AMF network element is a control plane network element provided by an operator network, and is responsible for access control and mobility management for accessing the operator network by a terminal device, for example, including functions such as mobility status management, allocation of a temporary user identity, and user authentication and authorization.

The SMF network element is a control plane network element provided by the operator network and is responsible for managing a PDU session of the terminal device. The PDU session is a channel for transmitting a PDU, and the terminal device needs to transmit the PDU to the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes user plane-related functions such as data packet routing and transmission, packet detection, service usage reporting, quality of service (Quality of Service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The UDM network element is a control plane network element provided by the operator, and is responsible for storing information such as a subscriber permanent identifier (subscriber permanent identifier, SUPI), a security context (security context), and subscription data of a subscriber in the operator network.

The AF network element is a function network element configured to provide various business services, can interact with a core network through another network element, and can interact with a policy management framework to perform policy management.

In addition, the CN may further include another possible network element, for example, a network exposure function (network exposure function, NEF) network element or a unified data repository (unified data repository, UDR) network element. The NEF network element is configured to provide a framework, authentication, and an interface that are related to network capability exposure and transmit information between a 5G system network function and another network function. The UDR network element is mainly configured to store subscription data, policy data, structured data for exposure, and application data that are related to a user.

### 4. DN

The DN, which may also be referred to as a packet data network (packet data network, PDN), is a network located outside an operator network. The operator network may access a plurality of DNs. Application servers corresponding to a plurality of services may be deployed in the DN, to provide a plurality of possible services for a terminal device. An application layer corresponding to an application layer of the terminal device may be disposed in the application server.

FIG. 3 is a schematic diagram of an architecture of a 5GS supporting a TSN network to which an embodiment of this application is applicable. As shown in FIG. 3, the TSN network may consider the 5GS as a TSN bridge device, and data packets of various industrial applications may be sent in an uplink/downlink through the 5GS. Data of the industrial application may be sent by a DN (for example, a TSN controller) to a UPF, sent by the UPF to a UE connected to an industrial device (for example, a sensor or an operation arm), and sent by the UE to the connected industrial device. Similarly, industrial data may alternatively be sent to the DN by the industrial device. In the 5GS, data transmission is performed between the UE and a base station through a Uu interface, and data transmission is performed between the base station and a core network data plane node UPF through an N3 interface/N3 tunnel. In a possible implementation, the TSN controller may be deployed on a network side, for example, a side connected to the UPF, or may be deployed on a user side, for example, a side connected to the UE. In a scenario in which the 5GS supports the IIoT network shown in FIG. 3, a packet loss or a transmission failure of a data packet may occur in the 5GS, and a transmission failure of an uplink/downlink data packet may occur on a Uu interface, or may occur on an N3 interface.

The following explains and describes related technical features in embodiments of this application. It should be noted that these explanations are intended to make embodiments of this application easier to understand, but should not be considered as a limitation on the protection scope claimed in this application.

### 1. Quality of service (quality of service, QoS) flow

Data transmission may be performed between a terminal device and a UPF by using a protocol data unit (packet data unit, PDU) session. A plurality of data flows with different QoS requirements, namely, QoS flows, may be transmitted in each PDU session.

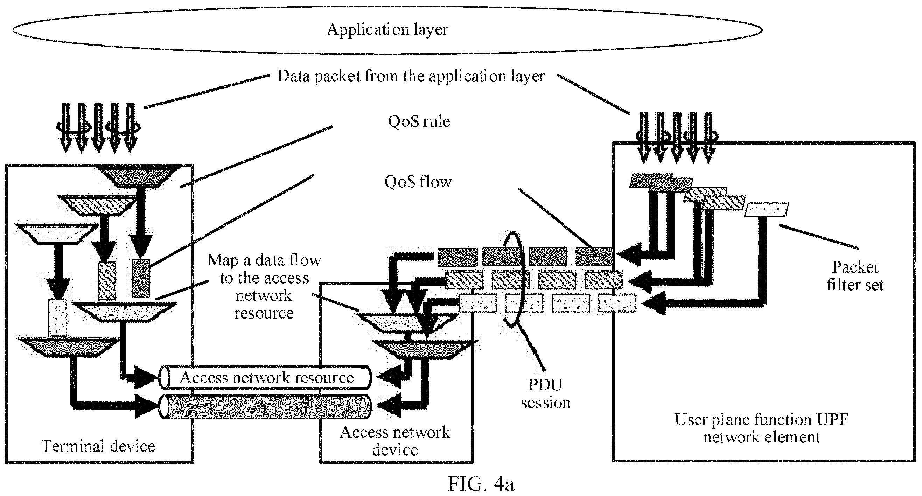

FIG. 4a is a schematic diagram of a QoS model in a 5G communication system according to an embodiment of this application. As shown in FIG. 4a, in a downlink direction, after data packets arrive at a UPF network element, the UPF network element distinguishes the downlink data packets into different QoS flows based on packet filter sets (packet filter sets) in a packet detection rule (packet detection rule, PDR) configured by an SMF network element. A data packet in the QoS flow is marked with a QoS flow identifier (QoS flow identifier, QFI). Then, the UPF network element transfers the data packet to an access network device through an N3 interface (to be specific, an interface between the access network device and the UPF network element). After receiving the data packet, the access network device determines, based on the QFI corresponding to the data packet, a QoS flow to which the data packet belongs, and then transmits the downlink data packet over an air interface based on a QoS parameter of the QoS flow. In an uplink direction, after obtaining data packets, an application layer of the terminal device may distinguish the uplink data packets into different QoS flows based on packet filter sets in a QoS rule configured by the SMF network element, and then transmit the uplink data packets over an air interface. Each QoS flow is associated with a QoS profile (QoS profile), at least one QoS rule, and an optional QoS parameter.

### 2. UPF local loopback

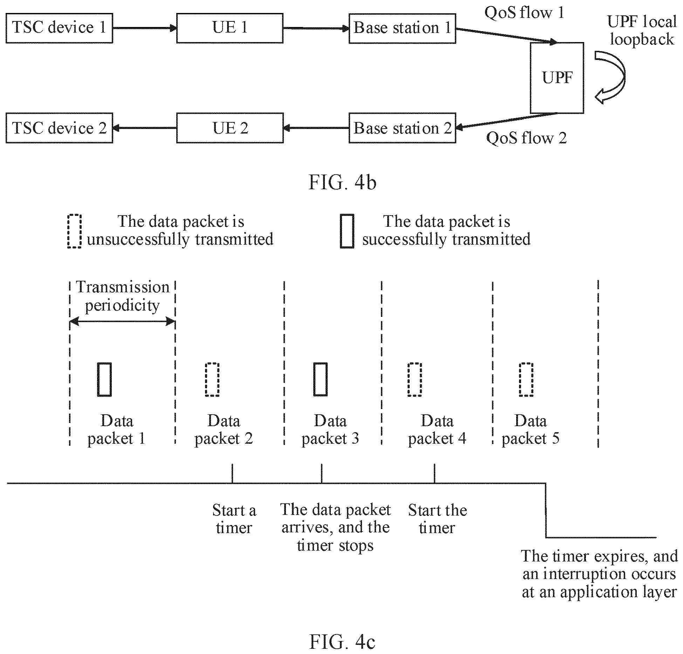

FIG. 4b is a schematic diagram of an application scenario of time sensitive communication (time sensitive communication, TSC) according to an embodiment of this application. As shown in FIG. 4b, one TSC controller connected to one UE needs to send TSC data to another TSC device, and the another TSC device is connected to another UE. The two UEs are served by a same UPF, and are served by a same base station or different base stations. For example, a TSC device 1 needs to send TSC data to a TSC device 2. Specifically, the TSC device 1 may send the TSC data to a UE 1, the UE 1 sends the TSC data to the UPF by using a base station 1, the UPF sends the TSC data to a UE 2 by using a base station 2, and the UE 2 sends the TSC data to the TSC device 2. A QoS flow transmitted in a direction from the UE 1 to the UPF is a QoS flow 1, and a QoS flow transmitted in a direction from the UPF to the UE 2 is a QoS flow 2. The base station 1 and the base station 2 may be the same or different. When the UE 1 and the UE 2 are served by a same base station, the base station 1 and the base station 2 are a same base station. When the UE 1 and the UE 2 are served by different base stations, the base station 1 and the base station 2 are two different base stations. The foregoing data transmission manner is referred to as the UPF local loopback, and is also referred to as a UPF local switch in the 3GPP standard.

### 3. Time sensitive communication assistance information

For a time sensitive service, an SMF may provide time sensitive communication assistance information (time sensitive communication assistance information, TSCAI) of the service to an access network device when establishing a QoS flow. The TSCAI may describe a service feature of the time sensitive service used in a 5G system, to help the access network device perform effective resource scheduling. The TSCAI includes a flow direction (flow direction) of the QoS flow of the time sensitive service, for example, downlink or uplink. The TSCAI may further include a periodicity, indicating a time interval between two bursts of the time sensitive service. The TSCAI may further include burst arrival time (burst arrival time). For a downlink service, the burst arrival time refers to a latest possible moment at which the first data packet of a data burst arrives at an ingress of the access network device. For an uplink service, the burst arrival time refers to a moment at which the first data packet of a data burst arrives at an egress of the terminal device.

### 4. Survival time

A 5G communication system may support a plurality of possible services, for example, a URLLC service, and a 1 ms latency of and 99.999% reliability need to be ensured. An IIoT service requires higher latency and reliability assurance, for example, 0.5 ms latency and 99.9999% reliability. To avoid great impact of an occasional communication error at a network layer on an application layer, survival time may be set at an application layer of an IIoT device. The survival time means that, if the application layer of the IIoT device does not receive a data packet within a time range in which the data packet is expected to arrive, the application layer enters a state of survival time; if an expected application layer data packet arrives within the survival time, the application layer exits the state of the survival time; and if no expected application layer data packet arrives within the survival time, an interruption occurs at the application layer. When the interruption occurs at the application layer, the application layer enters a predefined state, for example, service interruption or breakdown.

For a service in which a data packet is periodically generated, in an example, the survival time may be defined as a quantity (for example, a) of consecutive unsuccessfully transmitted data packets. If the quantity of consecutive unsuccessfully transmitted data packets is greater than or equal to a, the service interruption occurs at the application layer. For example, as shown in FIG. 4c, one data packet may be transmitted in one transmission periodicity, and a is 2. In other words, when two consecutive data packets are unsuccessfully transmitted, the service interruption occurs at the application layer. Specifically, as shown in FIG. 4, when a data packet 2 in FIG. 4c is unsuccessfully transmitted, the application layer enters the state of the survival time; when a data packet 3 in a next periodicity is successfully transmitted, the application layer exits the state of the survival time; when a data packet 4 in a next periodicity is unsuccessfully transmitted, the application layer enters the state of the survival time again; and if a data packet 5 is still unsuccessfully transmitted, the survival time expires, and the interruption occurs at the application layer.

In another example, the survival time may also be defined as a quantity (for example, c) of consecutive transmission periodicities in which transmission fails. The transmission periodicity in which transmission fails may be a transmission periodicity in which a data packet fails to be transmitted, or a transmission periodicity in which a quantity of unsuccessfully transmitted data packets is greater than or equal to a first threshold, or a transmission periodicity in which an amount of unsuccessfully transmitted data is greater than or equal to a second threshold. The first threshold and the second threshold may be preset. If the quantity of consecutive transmission periodicities in which transmission fails is greater than or equal to c, service interruption occurs at the application layer.

It should be noted that downlink transmission is used as an example, and the foregoing data packet that fails to be transmitted may include:
(1) a data packet that is determined by a PDCP layer of an access network device and that fails to be transmitted (in other words, fails to be sent);
(2) a data packet discarded by a PDCP layer due to expiration of a discard (discard) timer (timer) at the PDCP layer; and
(3) a data packet that is sent by the access network device to a terminal device through an air interface, but for which an acknowledgment response (for example, an ACK) has not received from the terminal device.

### 5. Unacknowledged mode and acknowledged mode

There are a variety of IIoT services in the industrial field, and there are a plurality of interaction modes between controllers and devices of these IIoT services.

### 1. Unacknowledged mode

In embodiments of this application, the unacknowledged mode may also be referred to as a point-to-point unacknowledged mode, a non-response mode, or a non-association mode. Alternatively, the unacknowledged mode may be understood as that there is no association relationship or binding relationship between uplink data transmission and downlink data transmission. Alternatively, the unacknowledged mode may be understood as that a transmitting end sends a data packet/message, and a receiving end does not send feedback information or a response message corresponding to the data packet/message. Alternatively, the unacknowledged mode may have another name. This is not limited in embodiments of this application. For ease of description, the following uses "unacknowledged mode" as an example for description.

In the unacknowledged mode, the receiving end determines, based on an interval of receiving data packets, whether the service is normal. Specifically, the transmitting end periodically sends data/a control instruction, and the receiving end performs a corresponding operation after receiving the data/control instruction. If the receiving end does not receive a data packet within a time period after receiving a data packet, an application layer enters a state of survival time. If the receiving end does not receive a data packet within the survival time, it is considered that a link faulty/shutdown occurs.

### 2. Acknowledged mode

In embodiments of this application, the acknowledged mode may also be referred to as a point-to-point acknowledged mode, a response mode, or an association mode. Alternatively, the acknowledged mode may be understood as that there is an association relationship or binding relationship between uplink data transmission and downlink data transmission. Alternatively, the acknowledged mode may be understood as that a transmitting end sends a data packet/message, and a receiving end sends feedback information or a response message corresponding to the data packet/message. Alternatively, the acknowledged mode may have another name. This is not limited in embodiments of this application. For ease of description, the following uses "acknowledged mode" as an example for description.

In the acknowledged mode, the transmitting end determines, based on acknowledgment from the receiving end, whether the service is normal. Specifically, the transmitting end periodically (for example, a periodicity is T) sends data/a control instruction, and the receiving end responds to the data/instruction after receiving the data/instruction. If the transmitting end does not receive an acknowledgment message from the receiving end within a time period, the transmitting end (or an application layer of the transmitting end) enters a state of survival time and performs a retransmission operation. After the transmitting end performs at least one time of retransmission within a time period of the survival time (if a plurality of times of retransmission are performed, an interval for one time of retransmission is T), if no response message is received from the receiving end, it is considered that a link faulty or shutdown occurs.

It can be learned from the foregoing descriptions that, to ensure availability of the IIoT service, when a transmission packet loss occurs, an application layer of the IIoT device enters the state of the survival time. To avoid an application shutdown caused by expiration of the survival time, transmission reliability of a communication link needs to be improved to avoid a packet loss. In a possible implementation, an SMF uses TSCAI sent to an access network device to carry the survival time. It can be learned from the foregoing descriptions of the TSCAI that the TSCAI is at a granularity of an uplink/downlink QoS flow. Therefore, the survival time is also at a granularity of an uplink/downlink QoS flow. To be specific, transmission reliability of only one QoS flow in an uplink direction or one QoS flow in a downlink direction can be ensured by setting the survival time.

However, for a service in the acknowledged mode, the transmitting end needs to determine, based on the acknowledgment of the receiving end, whether the service is normal. Therefore, when a packet loss occurs in transmission in one direction, only transmission reliability in this direction is improved, and there is still a high risk of an application shutdown. For example, when a packet loss occurs in uplink transmission, (herein, sending a data packet by the transmitting end to the receiving end is referred to as uplink transmission, and sending a response data packet by the receiving end to the transmitting end is referred to as downlink transmission), reliability of the uplink transmission is improved, and a packet loss probability of subsequent uplink transmission of data is reduced. However, reliability of the downlink transmission is not improved, and there is still a probability of a packet loss. If subsequent downlink transmission of a response data packet fails, an application shutdown occurs. For a service in the acknowledged mode, if a packet loss occurs in one transmission direction, reliability of bidirectional transmission needs to be improved, to ensure service availability.

For a TSC service shown in FIG. 4b, both transmission reliability in a direction from a UE 1 to a UPF and transmission reliability in a direction from the UPF to a UE 2 need to be ensured. If a packet loss occurs in a direction from the UE 1 to the UPF (corresponding to a QoS flow 1), only transmission reliability in this direction is improved, and a probability of a subsequent packet loss in this direction is reduced. However, transmission reliability in the direction from the UPF to the UE 2 (corresponding to a QoS flow 2) is not improved, there is still a probability of a packet loss, and there is still a high risk of an application shutdown.

For some XR services, a video generated by an application layer of an XR device includes image data and audio data. The image data and the audio data are transmitted to a terminal device by using different QoS flows. When a transmission failure occurs in a QoS flow corresponding to the audio data, if only reliability of the QoS flow corresponding to the audio data is improved, transmission of the XR service still cannot be ensured, and reliability of a QoS flow corresponding to the image data needs to be synchronously improved.

In view of this, the present invention provides a data transmission method, to improve reliability of data transmission.

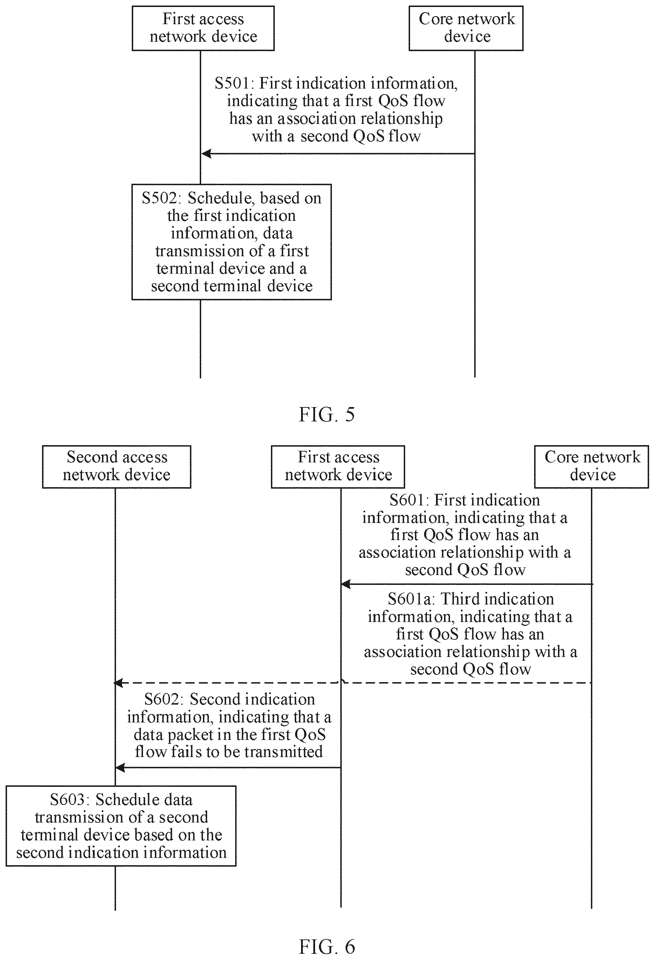

FIG. 5 is a schematic flowchart of a data transmission method according to an embodiment of this application. This embodiment relates to a specific process of data transmission among a core network device, a first access network device, a first terminal device, and a second terminal device. Execution bodies of this embodiment may be the core network device, the first access network device, the first terminal device, and the second terminal device, or may be modules, for example, chips, that are respectively used in the core network device, the first access network device, the first terminal device, and the second terminal device. An example in which the core network device, the first access network device, the first terminal device, and the second terminal device are used as the execution bodies is used for description below. The first access network device provides a service for the first terminal device and the second terminal device.

In this embodiment of this application, the core network device may be a core network device other than an SMF, for example, may be an AMF or another core network device. This is not limited in this embodiment of this application. An example in which the core network device is the SMF is used for description below.

As shown in FIG. 5, the method may include S501 and S502. An execution sequence of the steps is not limited in this embodiment of this application.

S501: The SMF sends first indication information to the first access network device, and correspondingly, the first access network device receives the first indication information from the SMF. The first indication information indicates that a QoS flow (which is referred to as a first QoS flow below) of the first terminal device (which is referred to as a UE 1 below) has an association relationship with a QoS flow (which is referred to as a second QoS flow below) of the second terminal device (which is referred to as a UE 2 below).

In the embodiment shown in FIG. 5, the first QoS flow may include one or more QoS flows, and the second QoS flow may include one or more QoS flows. The first QoS flow belongs to a first PDU session, and the second QoS flow belongs to a second PDU session.

Optionally, that a first QoS flow has an association relationship with a second QoS flow may be understood as that a data packet transmitted by using the first QoS flow and a data packet transmitted by using the second QoS flow are a same data packet, or may be understood as that a data packet is transmitted by using the second QoS flow after being transmitted by using the first QoS flow.

For example, the data packet transmitted by using the first QoS flow and the data packet transmitted by using the second QoS flow are a same data packet generated by a same application. For example, a data packet generated by an application layer of a TSC device or an XR device is first transmitted with the UE 1 by using a QoS flow 1 in a PDU session A. After UPF local loopback, the data packet is then transmitted with the UE 2 by using a QoS flow 2 in a PDU session B.

Optionally, that a first QoS flow has an association relationship with a second QoS flow may be understood as that a data packet transmitted by using the first QoS flow and a data packet transmitted by using the second QoS flow are different types of data packets that have a same source.

For example, the data packet transmitted by using the first QoS flow and the data packet transmitted by using the second QoS flow are different data packets generated by a same device. For example, an audio generated by an application layer of an XR device is transmitted with the UE 1 by using a QoS flow 1 in a PDU session A, and an image generated by the application layer of the XR device is transmitted with the UE 2 by using a QoS flow 2 in a PDU session B. Alternatively, an audio generated or transferred by the UE 1 is transmitted with the application layer of the XR device by using the QoS flow 1 in the PDU session A, and an image generated or transferred by the UE 2 is transmitted with the application layer of the XR device by using the QoS flow 2 in the PDU session B. For another example, a tactile signal generated by a tactile internet of things (Tactile Internet, TI) application is transmitted with the UE 1 by using a QoS flow 1 in a PDU session A, and a gustatory signal is transmitted with the UE 2 by using a QoS flow 2 in a PDU session B. Alternatively, a tactile signal generated or transmitted by the UE 1 is transmitted with the TI application by using the QoS flow 1 in the PDU session A, and a gustatory signal generated or transmitted by the UE 2 is transmitted with the TI application by using the QoS flow 2 in the PDU session B.

Optionally, that a first QoS flow has an association relationship with a second QoS flow may be understood as that a data packet transmitted by using the first QoS flow and a data packet transmitted by using the second QoS flow have same QoS guarantee.

For example, the data packet transmitted by using the QoS flow 1 and the data packet transmitted by using the QoS flow 2 have same latency guarantee and/or reliability guarantee. For example, when the access network device improves reliability of the QoS flow 1, reliability of the QoS flow 2 needs to be correspondingly improved.

The SMF indicates, to the first access network device based on the first indication information, that the first QoS flow has an association relationship with the second QoS flow. A manner in which the SMF sends the first indication information to the first access network device includes but is not limited to the following several manners:
Manner 1: The first indication information includes information about the first QoS flow and information about the second QoS flow.

The information about the first QoS flow may include information for identifying a QoS flow, for example, a QFI. Optionally, the information about the first QoS flow may further include any one or more of the following: information for identifying the UE 1, for example, an international mobile subscriber identity (International Mobile Subscriber Identity, IMSI), a 5G-temporary subscriber identity (SG-Temporary Mobile Subscriber Identity, 5G-TMSI), an internet protocol (Internet protocol, IP) address, or a core network general packet radio service (general packet radio service, GPRS) tunnelling protocol for the user plane (GPRS Tunnelling Protocol for the user plane, GTP-U) address; and information for identifying a PDU session to which the first QoS flow belongs, for example, a PDU session ID.

The information about the second QoS flow may include information for identifying a QoS flow, for example, a QFI. Optionally, the information about the second QoS flow may further include any one or more of the following: information for identifying the UE 2, for example, an IMSI, a 5G-TMSI, an IP address, and a core network tunnel address; and information for identifying a PDU session to which the second QoS flow belongs, for example, a PDU session ID.

In a possible manner (which is referred to as a manner 1.1), the first indication information may be an information element specific to the UE 1. In other words, it may be understood that the first indication information is for carrying information related to the UE 1. For example, the first indication information may be configuration information of a QoS flow of the UE 1, and the configuration information includes configuration information of the first QoS flow. In this case, the manner 1.1 may be further understood as that, in addition to the configuration information of the first QoS flow, the information element specific to the UE 1 further carries the information about the second QoS flow (for example, the QFI of the second QoS flow).

When the first access network device receives the first indication information, the first indication information is for carrying the information related to the UE 1, and the first indication information carries the information about the second QoS flow of the UE 2. Therefore, the first access network device can determine that the first QoS flow of the UE 1 has an association relationship with the second QoS flow of the UE 2.

In another possible manner (which is referred to as a manner 1.2), the SMF further sends, to the first access network device, the configuration information of the QoS flow of the UE 1 and configuration information of the QoS flow of the UE 2. The configuration information of the QoS flow of the UE 1 and the configuration information of the QoS flow of the UE 2 include the configuration information of the first QoS flow and configuration information of the second QoS flow. The access network device determines the QoS flows of the UE 1 and the UE 2 based on the configuration information.

In the manner 1.2, a function of the first indication information is to indicate one or more QoS flows (namely, the first QoS flow) in the QoS flows of the UE 1 and one or more QoS flows (namely, the second QoS flow) in the QoS flows of the UE 2. For example, the first indication information includes the QFI of the first QoS flow and the QFI of the second QoS flow, and the first access network device can learn, based on the first indication information, that the first QoS flow has an association relationship with the second QoS flow. Further, the first access network device determines, based on second indication information, specific configurations of the first QoS flow and the second QoS flow.

Manner 2: The first indication information includes information about the first PDU session and information about the second PDU session.

The information about the first PDU session includes information for identifying the first PDU session. Optionally, the information about the first PDU session may further include information for identifying the UE 1, and the information about the second PDU session includes information for identifying the second PDU session. Optionally, the information about the second PDU session may further include information for identifying the UE 2.

In a possible manner (which is referred to as a manner 2.1), the first indication information may be an information element specific to the UE 1. In other words, it may be understood that the first indication information is for carrying information related to the UE 1. For example, the first indication information may be configuration information of a PDU session of the UE 1, and the configuration information includes configuration information of the first PDU session. In this case, the manner 2.1 may be further understood as that, in addition to the configuration information of the first PDU session, the information element specific to the UE 1 further carries the information about the second PDU session (for example, an ID of the second PDU session).

When the first access network device receives the first indication information, the first indication information is for carrying the information related to the UE 1, and the first indication information carries the information about the second PDU session of the UE 2. Therefore, the first access network device can determine that a QoS flow in the first PDU session of the UE 1 has an association relationship with a QoS flow in the second PDU session of the UE 2.

In another possible manner (which is referred to as a manner 2.2), the SMF further sends, to the first access network device, the configuration information of the PDU session of the UE 1 and configuration information of the PDU session of the UE 2. The configuration information of the PDU session of the UE 1 and the configuration information of the PDU session of the UE 2 include the configuration information of the first PDU session and configuration information of the second PDU session. The first access network device determines the PDU sessions of the UE 1 and the UE 2 based on the configuration information.

In the manner 2.2, a function of the first indication information is to indicate one or more PDU sessions (namely, the first PDU session) in the PDU sessions of the UE 1 and one or more PDU sessions (namely, the second PDU session) in the PDU sessions of the UE 2. For example, the first indication information includes an ID of the first PDU session and an ID of the second PDU session, and the first access network device can learn, based on the first indication information, that a QoS flow in the first PDU session has an association relationship with a QoS flow in the second PDU session.

Optionally, in the manner 2 (which includes the manner 2.1 and the manner 2.2), all QoS flows in the first PDU session and the second PDU session have an association relationship, or QoS flows with a same QFI in the first PDU session and the second PDU session have an association relationship. This is not limited in this embodiment of this application. For example, if the QFI of the first QoS flow is the same as the QFI of the second QoS flow, it indicates that the first QoS flow has an association relationship with the second QoS flow.

Manner 3: The first indication information includes configuration information of the first QoS flow and configuration information of the second QoS flow. An index value included in the configuration information of the first QoS flow is the same as an index value included in the configuration information of the second QoS flow.

For example, the first indication information includes configuration information of the QoS flow 1 of the UE 1, and the configuration information includes an index value X. The first indication information further includes configuration information of the QoS flow 2 of the UE 2, and the configuration information also includes an index value X. In this case, it indicates that the QoS flow 1 of the UE 1 has an association relationship with the QoS flow 2 of the UE 2. Optionally, the index value may be carried in TSCAI of the QoS flow.

Manner 4: The first indication information includes configuration information of the first PDU session and configuration information of the second PDU session. An index value included in the configuration information of the first PDU session is the same as an index value included in the configuration information of the second PDU session. Optionally, the QFI of the first QoS flow is the same as the QFI of the second QoS flow.

For example, the first indication information includes configuration information of a PDU session 1 of the UE 1, and the configuration information includes an index value Y The first indication information further includes configuration information of a PDU session 2 of the UE 2, and the configuration information also includes an index value Y In this case, it indicates that a QoS flow in the PDU session 1 of the UE 1 has an association relationship with a QoS flow in the PDU session 2 of the UE 2. Optionally, all QoS flows in the PDU session 1 and the PDU session 2 have an association relationship, or QoS flows with a same QFI in the PDU session 1 and the PDU session 2 have a mapping relationship.

Manner 5: The first indication information includes configuration information of the first PDU session and configuration information of the second PDU session. The configuration information of the first PDU session includes configuration information of the first QoS flow, and the configuration information of the second PDU session includes configuration information of the second QoS flow. An index value included in the configuration information of the first PDU session is the same as an index value included in the configuration information of the second PDU session, and an index value included in the configuration information of the first QoS flow is the same as an index value included in the configuration information of the second QoS flow.

For example, the first indication information includes configuration information of a PDU session 1 of the UE 1, and the configuration information includes an index value X. The first indication information further includes configuration information of a PDU session 2 of the UE 2, and the configuration information also includes an index value X. In this case, it indicates that a QoS flow in the PDU session 1 of the UE 1 has an association relationship with a QoS flow in the PDU session 2 of the UE 2. The configuration information of the PDU session 1 of the UE 1 includes configuration information of the QoS flow 1 and configuration information of the QoS flow 2, and both the configuration information of the QoS flow 1 and the configuration information of the QoS flow 2 include a same index value Y In this case, it indicates that the QoS flow 1 in the PDU session 1 has a mapping relationship with the QoS flow 2 in the PDU session 2.

Manner 6: The first indication information includes information for identifying the UE 1 and information for identifying the UE 2.

Optionally, the information for identifying the UE 1 and the information for identifying the UE 2 each may be an IMSI, a 5G-TMSI, an IP address, a core network tunnel address, or the like.

Optionally, in the manner 6, the first access network device further receives, from the SMF, configuration information of the first QoS flow and configuration information of the second QoS flow. The first QoS flow belongs to the first PDU session, and the second QoS flow belongs to the second PDU session. When the QFI of the first QoS flow is the same as the QFI of the second QoS flow, and an identifier of the first PDU session is the same as an identifier of the second PDU session, it indicates that the first QoS flow has an association relationship with the second QoS flow.

Optionally, in the manner 6, the first access network device further receives, from the SMF, configuration information of the first QoS flow and configuration information of the second QoS flow. When an index value included in the configuration information of the first QoS flow is the same as an index value included in the configuration information of the second QoS flow, it indicates that the first QoS flow has an association relationship with the second QoS flow.

Optionally, in the manner 6, the first access network device further receives, from the SMF, configuration information of the first PDU session and configuration information of the second PDU session. When an index value included in the configuration information of the first PDU session is the same as an index value included in the configuration information of the second PDU session, all QoS flows in the first PDU session and the second PDU session have an association relationship, or QoS flows with a same QFI in the first PDU session and the second PDU session have an association relationship. For example, when the QFI of the first QoS flow is the same as the QFI of the second QoS flow, it indicates that the first QoS flow has an association relationship with the second QoS flow.

Optionally, in the manner 6, the first access network device further receives, from the SMF, configuration information of the first PDU session and configuration information of the second PDU session. The configuration information of the first PDU session includes configuration information of the first QoS flow, and the configuration information of the second PDU session includes configuration information of the second QoS flow. When an index value included in the configuration information of the first PDU session is the same as an index value included in the configuration information of the second PDU session, and an index value included in the configuration information of the first QoS flow is the same as an index value included in the configuration information of the second QoS flow, it indicates that the first QoS flow has an association relationship with the second QoS flow.

Manner 7: The first indication information includes configuration information of the UE 1 and information for identifying the UE 2.

Optionally, the configuration information of the UE 1 may include configuration information of a PDU session of the UE 1, configuration information of a QoS flow that belongs to the first PDU session, or the like. Optionally, information for identifying the UE 1 and the information for identifying the UE 2 each may be an IMSI, a 5G-TMSI, an IP address, a core network tunnel address, or the like.

When the first access network device receives the first indication information, the first indication information is for carrying information related to the UE 1, and the first indication information carries the information for identifying the UE 2. Therefore, the first access network device can determine that the QoS flow of the UE 1 has an association relationship with the QoS flow of the UE 2.

Optionally, when the QFI of the first QoS flow of the UE 1 is the same as the QFI of the second QoS flow of the UE 2, and an identifier of the first PDU session is the same as an identifier of the second PDU session, it indicates that the first QoS flow has an association relationship with the second QoS flow.

Optionally, the first indication information includes configuration information of the first QoS flow, and the configuration information includes an index value. When an index value included in configuration information of the second QoS flow of the UE 2 is the same as the index value included in the configuration information of the first QoS flow, it indicates that the first QoS flow has an association relationship with the second QoS flow.

Optionally, the first indication information includes configuration information of the first PDU session, and the configuration information includes an index value. When an index value included in configuration information of the second PDU session of the UE 2 is the same as the index value included in the configuration information of the first PDU session, it indicates a QoS flow in the first PDU session has an association relationship with a QoS flow in the second PDU session. For example, all QoS flows in the first PDU session and the second PDU session have an association relationship, or QoS flows with a same QFI in the first PDU session and the second PDU session have an association relationship. For example, if the QFI of the first QoS flow is the same as the QFI of the second QoS flow, it indicates that the first QoS flow has an association relationship with the second QoS flow.

Optionally, the first indication information includes configuration information of the first PDU session, and the configuration information of the first PDU session includes configuration information of the first QoS flow. When an index value included in the configuration information of the first PDU session is the same as an index value included in configuration information of the second PDU session of the UE 2, and an index value included in the configuration information of the first QoS flow is the same as an index value included in configuration information of the second QoS flow, it indicates that the first QoS flow has an association relationship with the second QoS flow.

S502: The first access network device schedules, based on the first indication information, data transmission of the first terminal device and the second terminal device.

That the first access network device schedules, based on the first indication information, the data transmission of the first terminal device and the second terminal device may be understood as that the first access network device schedules, based on the first indication information, data transmission between the first access network device and the first terminal device, and the first access network device schedules, based on the first indication information, data transmission between the first access network device and the second terminal device.

For example, when the first access network device identifies, based on information indicated by the SMF, that there is an association relationship between a QoS flow X in the PDU session A of the UE 1 and a QoS flow Y in the PDU session B of the UE 2, if the first access network device detects that an uplink packet loss occurs on the UE 1, to avoid expiration of survival time of a TSC service, the first access network device needs to synchronously improve transmission reliability of a data packet in the QoS flow X and transmission reliability of a subsequent data packet in the QoS flow Y

For example, in the UPF local loopback scenario shown in FIG. 4b, a QoS flow to which a data packet sent by the UE 1 to the UPF via the first access network device belongs is the QoS flow 1, and a QoS flow to which a data packet looped back by the UPF to the UE 2 via the first access network device belongs is the QoS flow 2. When the first access network device identifies, based on the information indicated by the SMF, that there is an association relationship between the QoS flow 1 and the QoS flow 2, if the first access network device detects that an uplink packet loss occurs in the QoS flow 1 of the UE 1, to avoid expiration of survival time of a TSC service, the first access network device needs to synchronously improve reliability of uplink transmission of a subsequent data packet in the QoS flow 2 and reliability of downlink transmission of a subsequent data packet in the QoS flow 2.

Optionally, the first access network device may improve reliability of data transmission in the following manner: activating a PDCP replication function of a DRB corresponding to a QoS flow; using more legs to replicate and transmit a DRB corresponding to a QoS flow; switching an RLC entity associated with a PDCP of a DRB from one RLC entity to another RLC entity, or the like.

The foregoing embodiment provides a data transmission method. The access network device can determine, based on the indication information obtained from the core network device such as the SMF, that there are QoS flows with an association relationship in the UE 1 and the UE 2. When a data packet loss or a transmission failure occurs in a QoS flow, the access network device not only improves reliability of data transmission in the QoS flow, but also improves reliability of data transmission in a QoS flow having an association relationship with the QoS flow. In this way, when the transmission failure is detected, the access network device and the terminal devices can transmit data in a more robust transmission manner, so that a service shutdown caused by expiration of survival time can be avoided, and service reliability is improved.

FIG. 6 is a schematic flowchart of a data transmission method according to an embodiment of this application. This embodiment relates to a specific process of data transmission among a core network device, a first access network device, a second access network device, a first terminal device, and a second terminal device. Execution bodies of this embodiment may be the core network device, the first access network device, the second access network device, the first terminal device, and the second terminal device, or may be modules, for example, chips, that are respectively used in the core network device, the first access network device, the second access network device, the first terminal device, and the second terminal device. An example in which the core network device, the first access network device, the second access network device, the first terminal device, and the second terminal device are used as the execution bodies is used for description below. The first access network device provides a service for the first terminal device, and the second access network device provides a service for the second terminal device.

As shown in FIG. 6, the method may include S601, S602, and S603. S601a is optional. An execution sequence of the steps is not limited in this embodiment of this application.

S601: An SMF sends first indication information to the first access network device, and correspondingly, the first access network device receives the first indication information from the SMF. The first indication information indicates that a QoS flow (which is referred to as a first QoS flow below) of the first terminal device (which is referred to as a UE 1 below) has an association relationship with a QoS flow (which is referred to as a second QoS flow below) of the second terminal device (which is referred to as a UE 2 below).

Optionally, the first QoS flow has an association relationship with the second QoS flow. For details, refer to descriptions in S501.

In the embodiment shown in FIG. 6, the first QoS flow may include one or more QoS flows, and the second QoS flow may include one or more QoS flows. The first QoS flow belongs to a first PDU session, and the second QoS flow belongs to a second PDU session.

The first indication information includes configuration information of the first QoS flow. The first indication information further includes at least one of an identifier of the second QoS flow, an identifier of the second PDU session, an identifier of the second access network device, information for identifying the second terminal device, and a first mark value. This embodiment of this application includes but is not limited to the following examples.

Example 1: The first indication information includes the configuration information of the first QoS flow and the identifier of the second QoS flow. The first access network device determines, based on the first indication information, that the first QoS flow has an association relationship with the second QoS flow.

Example 2: The first indication information includes the configuration information of the first QoS flow and the identifier of the second QoS flow. When the second terminal device establishes more than one PDU session, the first indication information may further include the identifier of the second PDU session to which the second QoS flow belongs.

Example 3: The first indication information includes the configuration information of the first QoS flow and the identifier of the second QoS flow. When the QoS flow of the first terminal device has an association relationship with the QoS flow of the second terminal device, and has an association relationship with a QoS flow of a terminal device other than the second terminal device, the first indication information may include an identifier of the second terminal device. Optionally, the first indication information may further include the identifier of the second access network device that provides a service for the second terminal device.

Example 4: The first indication information includes the configuration information of the first QoS flow and the first mark value, and the first access network device determines, based on the first mark value in the first indication information, that the first QoS flow has an association relationship with another QoS flow. In this manner, the SMF further needs to send the configuration information of the second QoS flow and the first mark value to the second access network device.

S601a: Optionally, an SMF may alternatively send third indication information to a second access network device by using the method described in S601. The third indication information includes configuration information of a second QoS flow. The third indication information further includes at least one of an identifier of a first QoS flow, an identifier of a first PDU session, an identifier of a first access network device, information for identifying a first terminal device, and a first mark value.

S602: The first access network device sends second indication information to the second access network device, and correspondingly, the second access network device receives the second indication information from the first access network device. The second indication information indicates that a data packet in the first QoS flow that has an association relationship with the second QoS flow fails to be transmitted.

Optionally, the second indication information includes at least one of the information for identifying the second terminal device, information for identifying the second PDU session, and information for identifying the second QoS flow, or includes at least one of the information for identifying the first terminal device, information for identifying the first PDU session, and information for identifying the first QoS flow.

For example, in the example 4 described in S601, the first indication information includes the configuration information of the first QoS flow and the first mark value. The second indication information includes the first mark value. The second access network device determines, based on the first mark value, the second QoS flow that also carries the first mark value, to determine that the second QoS flow has an association relationship with the QoS flow (the first QoS flow) on which transmission fails and that is indicated by the first access network device.

S603: The second access network device schedules data transmission of the second terminal device based on the second indication information.

That the second access network device schedules the data transmission of the second terminal device based on the second indication information may be understood as that the second access network device schedules data transmission between the second access network device and the second terminal device based on the second indication information.

For example, the second access network device improves, based on the second indication information, reliability of data transmission in the second QoS flow. For example, the second access network device may improve the reliability of the data transmission in the following manner: activating a PDCP replication function of a DRB corresponding to the second QoS flow; using more legs to replicate and transmit a DRB corresponding to the second QoS flow; switching an RLC entity associated with a PDCP of a DRB from one RLC entity to another RLC entity, or the like.

The foregoing embodiment provides a data transmission method. The first access network device can determine, based on the indication information obtained from the core network device such as the SMF, that there are QoS flows with an association relationship in the UE 1 and the UE 2. When a data packet loss or a transmission failure occurs in a QoS flow, the first access network device notifies, to the second access network device, information about the QoS flow on which the transmission failure occurs, or information about a QoS flow that has an association relationship with the QoS flow on which the transmission failure occurs, so that not only reliability of data transmission in the QoS flow is improved, but also reliability of data transmission in the QoS flow that has an association relationship with the QoS flow can be improved. In this case, when the transmission failure is detected, the access network device and the terminal devices can perform data transmission in a more robust transmission manner, so that a service shutdown caused by expiration of survival time can be avoided, and service reliability is improved.

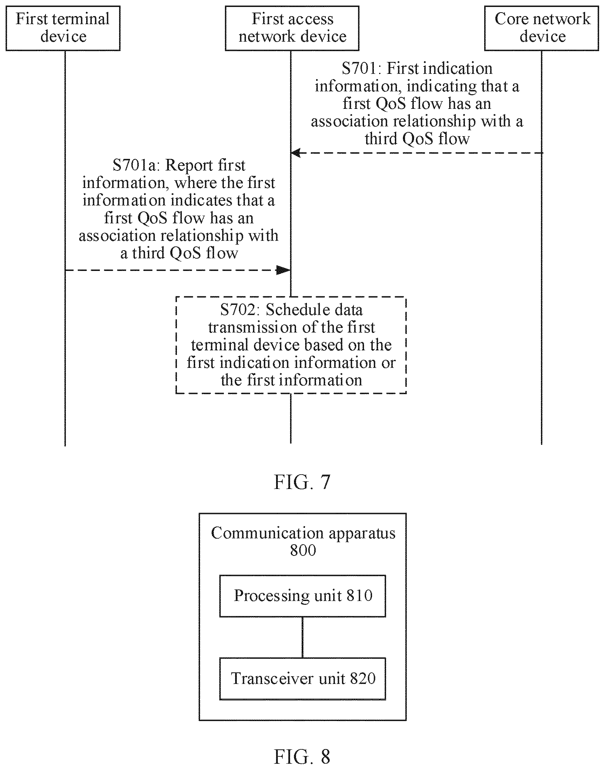

FIG. 7 is a schematic flowchart of a data transmission method according to an embodiment of this application. This embodiment relates to a specific process of data transmission among a core network device, a first access network device, and a first terminal device. Execution bodies of this embodiment may be the core network device, the first access network device, and the first terminal device, or may be modules, for example, chips, that are respectively used in the core network device, the first access network device, and the first terminal device. An example in which the core network device, the first access network device, and the first terminal device are used as the execution bodies is used for description below. The first access network device provides a service for the first terminal device.

As shown in FIG. 7, the method may include S701 and S702. S701 may be replaced with S701a. An execution sequence of the steps is not limited in this embodiment of this application.

S701: An SMF sends first indication information to the first access network device, and correspondingly, the first access network device receives the first indication information from the SMF. The first indication information indicates that a first QoS flow of the first terminal device (which is referred to as a UE 1 below) has an association relationship with a third QoS flow of the UE 1.

It should be noted that the embodiment shown in FIG. 7 is described by using an example in which two QoS flows (the first QoS flow and the third QoS flow) of the UE 1 have an association relationship. It should be understood that this embodiment of this application is not limited to that the two QoS flows of the UE 1 have an association relationship. For example, a plurality of QoS flows of the UE 1 may have an association relationship.

Optionally, that the first QoS flow has an association relationship with the third QoS flow may be understood as that a data packet transmitted by using the first QoS flow and a data packet transmitted by using the third QoS flow are different types of data packets that have a same source.

For example, the data packet transmitted by using the first QoS flow and the data packet transmitted by using the second QoS flow are different data packets generated by a same device. For example, an audio generated by an application layer of an XR device is transmitted with the UE 1 by using a QoS flow 1 in a PDU session A, and an image generated by the application layer of the XR device is transmitted with the UE 1 by using a QoS flow 3 in the PDU session A or a PDU session B. Alternatively, an audio generated or transferred by the UE 1 is transmitted with the application layer of the XR device by using the QoS flow 1 in the PDU session A, and an image generated or transferred by the UE 1 is transmitted with the application layer of the XR device by using the QoS flow 3 in the PDU session A or the PDU session B. For another example, a tactile signal generated by a tactile internet of things (Tactile Internet, TI) application is transmitted with the UE 1 by using the QoS flow 1 in the PDU session A, and a gustatory signal is transmitted with the UE 1 by using the QoS flow 3 in the PDU session A or the PDU session B. Alternatively, a tactile signal generated or transmitted by the UE 1 is transmitted with the TI application by using the QoS flow 1 in the PDU session A, and a gustatory signal generated or transmitted by the UE 1 is transmitted with the TI application by using the QoS flow 3 in the PDU session A or the PDU session B.

Optionally, that the first QoS flow has an association relationship with the third QoS flow may be understood as that a data packet transmitted by using the first QoS flow and a data packet transmitted by using the third QoS flow have same QoS guarantee.

For example, the data packet transmitted by using the QoS flow 1 and the data packet transmitted by using the QoS flow 3 have same latency guarantee and/or reliability guarantee. For example, when the access network device improves reliability of the QoS flow 1, reliability of the QoS flow 3 needs to be correspondingly improved.

Optionally, that the first QoS flow has an association relationship with the third QoS flow may be understood as that a data packet transmitted by using the first QoS flow and a data packet transmitted by using the third QoS flow are respectively an uplink data packet and a downlink data packet of a same service. For example, one QoS flow of the first QoS flow and the third QoS flow of the terminal device is for transmitting a TSC control message to a TSC device, and the other QoS flow is for receiving an acknowledgment message from the TSC device. For example, the two QoS flows are respectively for transmitting uplink data and downlink data of a service that is in an acknowledgment mode.

A manner in which the SMF sends the first indication information to the first access network device includes but is not limited to the following several manners:
Manner 1: The first indication information includes an identifier of the first QoS flow and an identifier of the third QoS flow.

The identifiers of the first QoS flow and the third QoS flow may be QFIs. Optionally, the first indication information may further include an ID of a PDU session to which the first QoS flow belongs and an ID of a PDU session to which the third QoS flow belongs.

In the manner 1, the SMF further sends configuration information of a QoS flow of the UE 1 to the first access network device, where the configuration information of the QoS flow of the UE 1 includes configuration information of the first QoS flow and configuration information of the third QoS flow.

Manner 2: The first indication information includes configuration information of the first QoS flow and an identifier of the third QoS flow.

The manner 2 may be understood as that the first indication information is for carrying the configuration information of the first QoS flow. In addition to the configuration information of the first QoS flow, the identifier (for example, a QFI of the third QoS flow) of the third QoS flow is further carried.

When the first access network device receives the first indication information, the first indication information is for carrying information related to the first QoS flow, and the first indication information carries information about the third QoS flow. Therefore, the first access network device can determine that there is an association relationship between the first QoS flow and the third QoS flow of the UE 1.

Manner 3: The first indication information includes configuration information of the first QoS flow and configuration information of the third QoS flow. An index value included in the configuration information of the first QoS flow is the same as an index value included in the configuration information of the third QoS flow. Optionally, the index value may be carried in TSCAI of the QoS flow.

Manner 4: The first indication information includes configuration information of a first PDU session and configuration information of a third PDU session. An index value included in the configuration information of the first PDU session is the same as an index value included in the configuration information of the third PDU session. The third QoS flow belongs to the third PDU session. Optionally, a QFI of the first QoS flow is the same as a QFI of the third QoS flow.

Manner 5: The first indication information includes configuration information of a first PDU session and configuration information of a third PDU session. The configuration information of the first PDU session includes configuration information of the first QoS flow, and the configuration information of the third PDU session includes configuration information of the third QoS flow. An index value included in the configuration information of the first PDU session is the same as an index value included in the configuration information of the third PDU session, and an index value included in the configuration information of the first QoS flow is the same as an index value included in the configuration information of the third QoS flow.

Optionally, S701 may be replaced with S701a.

S701a: The first terminal device reports first information to the first access network device, and correspondingly, the first access network device receives the first information from the first terminal device. The first information indicates that the first QoS flow of the first terminal device has an association relationship with the third QoS flow of the UE 1. Optionally, the first information may be a MAC CE or an RRC message. For content of the first information, refer to content of the first indication information in S701. Details are not described herein again.

S702: The first access network device schedules data transmission of the first terminal device based on the first indication information or the first information.

For example, when the first access network device identifies, based on information indicated by the SMF, that there is an association relationship between a QoS flow X and a QoS flow Y in the PDU session A of the UE 1, if the first access network device detects that a packet loss occurs in the QoS flow X, to avoid expiration of survival time of a TSC service, the first access network device needs to synchronously improve transmission reliability of a subsequent data packet in the QoS flow X and transmission reliability of a subsequent data packet in the QoS flow Y

The foregoing embodiment provides a data transmission method. The access network device can determine, based on the information obtained from the core network device such as the SMF or the terminal device, a plurality of QoS flows that are of the terminal device and that have an association relationship. When a data packet loss or a transmission failure occurs in a QoS flow, the access network device not only improves reliability of data transmission in the QoS flow, but also improves reliability of data transmission in a QoS flow having an association relationship with the QoS flow. In this way, when the transmission failure is detected, the access network device and the terminal devices can transmit data in a more robust transmission manner, so that a service shutdown caused by expiration of survival time can be avoided, and service reliability is improved.

It should be noted that, during specific implementation, a part of steps in FIG. 5, FIG. 6, and FIG. 7 may be selected for implementation, or a sequence of the steps in the figure may be adjusted for implementation. This is not limited in this application. It should be understood that performing a part of steps in the figure or adjusting a sequence of the steps for specific implementation shall fall within the protection scope of this application.

Embodiments of FIG. 5, FIG. 6, and FIG. 7 provide some methods. A core network device indicates, to an access network device based on indication information, that a plurality of QoS flows have an association relationship, and the access network device schedules, based on the indication information, data transmission with a terminal device, to ensure service reliability.

In addition to the foregoing methods, embodiments of this application further provide some solutions, to ensure reliability of data transmission.

Optionally, when indicating information about a QoS flow to a terminal device, an SMF may further carry one piece of indication information, to indicate whether there is an association relationship between uplink data packet transmission and downlink data packet transmission in the QoS flow.

In the foregoing manner, if there is an association relationship between uplink data packet transmission and downlink data packet transmission in a QoS flow, when a packet loss occurs in one direction, reliability of bidirectional transmission can be improved during scheduling by an access network device.

Optionally, when the SMF maps uplink and downlink service data flows to a same QoS flow, and QoS information carries TSCAI, it indicates that there is an association relationship between uplink transmission and downlink transmission that correspond to the QoS flow. When a packet loss occurs in one direction, reliability of bidirectional transmission needs to be improved. If the uplink and downlink service data flows are mapped to the same QoS flow, but the QoS information does not carry the TSCAI, it indicates that there is no association relationship between the uplink transmission and the downlink transmission.

In the foregoing manner, during scheduling, for a same QoS flow, the access network device needs to further determine whether there is an association relationship between uplink transmission and downlink transmission that correspond to the QoS flow, to determine, when a packet loss occurs in one direction, whether reliability of bidirectional transmission needs to be improved, so that scheduling is more flexible.

Embodiments of this application further provide some solutions, to ensure reliability of data transmission and reduce complexity.

Specifically, for different service data flows of a same terminal device, an SMF maps service data flows having an association relationship to a same QoS flow.

For example, same data flows from a same source are mapped to a same QoS flow. For example, in the scenario in FIG. 4b, a QoS flow 1 and a QoS flow 2 are mapped to a same QoS flow.

For example, different types of data flows from a same source are mapped to a same QoS flow. For example, for an XR service, the SMF maps an image data flow and an audio data flow of the XR service to a same QoS flow.

For example, if there is an association relationship between an uplink service data flow and a downlink service data flow of a terminal device, the SMF may map the two service data flows in different directions to a same QoS flow.

Optionally, if there is no association relationship between the service data flows in different directions, even if QoS requirements corresponding to the service data flows are the same or similar, the SMF maps the service data flows to different QoS flows.

In the foregoing manner, during scheduling, the access network device only needs to ensure a consistent QoS requirement for data packets in a same QoS flow, and does not need to perform special processing on data packets in different QoS flows, so that complexity is reduced.

It may be understood that, to implement functions in the foregoing embodiments, a CU and a DU may include corresponding hardware structures and/or software modules for performing the functions.

A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions. A person skilled in the art may use different methods to implement the described functions for each particular application, but it should not be considered that the implementation goes beyond the scope of this application.

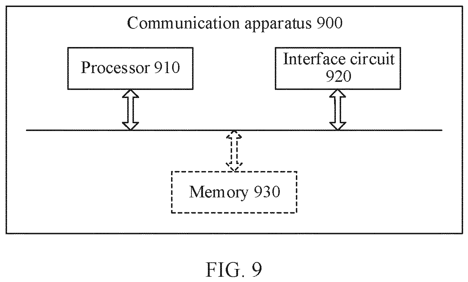

FIG. 8 and FIG. 9 are schematic diagrams of structures of possible communication apparatuses according to an embodiment of this application. As shown in FIG. 8, a communication apparatus 800 includes a processing unit 810 and a transceiver unit 820.

The communication apparatus 800 is configured to implement a function of the first access network device in the method embodiments shown in FIG. 5 to FIG. 7, or the communication apparatus 800 may include a module configured to implement any function or operation of the first access network device in the method embodiments shown in FIG. 5 to FIG. 7. The module may be all or partially implemented by using software, hardware, firmware, or any combination thereof.

When the communication apparatus 800 is configured to implement the function of the first access network device in the method embodiment shown in FIG. 5, the transceiver unit 720 is configured to receive first indication information from a core network device. The first indication information indicates that a first QoS flow of a first terminal device has an association relationship with a second QoS flow of a second terminal device. The first access network device serves the first terminal device and the second terminal device. The first QoS flow belongs to a first protocol data unit PDU session, and the second QoS flow belongs to a second PDU session. The processing unit 710 is configured to schedule, based on the first indication information, data transmission of the first terminal device and the second terminal device.

When the communication apparatus 800 is configured to implement the function of the first access network device in the method embodiment shown in FIG. 6, the transceiver unit 720 is configured to receive first indication information from a core network device. The first indication information indicates that a first QoS flow of a first terminal device has an association relationship with a second QoS flow of a second terminal device. The first access network device serves the first terminal device, and a second access network device serves the second terminal device. The first QoS flow belongs to a first protocol data unit PDU session, and the second QoS flow belongs to a second PDU session. The transceiver unit 720 is further configured to send second indication information to the second access network device, where the second indication information indicates that a data packet in the first QoS flow fails to be transmitted.

When the communication apparatus 800 is configured to implement the function of the first access network device in the method embodiment shown in FIG. 7, the transceiver unit 720 is configured to receive first indication information from a core network device. The first indication information indicates that a first QoS flow of the first terminal device has an association relationship with a third QoS flow. The processing unit 710 is configured to schedule data transmission of the first terminal device based on the first indication information.

For more detailed descriptions of the processing unit 710 and the transceiver unit 720, directly refer to related descriptions in the method embodiment shown in FIG. 5, FIG. 6, or FIG. 7. Details are not described herein again.

FIG. 9 is a schematic diagram of a structure of another possible communication apparatus according to an embodiment of this application. As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the method shown in FIG. 5, FIG. 6, or FIG. 7, the processor 910 is configured to perform a function of the processing unit 810, and the interface circuit 920 is configured to perform a function of the transceiver unit 820.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

In embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or the instructions may be stored in the computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state disk (solid-state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes.

## Claims

1. A data transmission method, wherein the method is applied to a first access network device or a chip in the first access network device, and the method comprises:
receiving first indication information from a core network device, wherein the first indication information indicates that a first quality of service QoS flow of a first terminal device has an association relationship with a second QoS flow of a second terminal device, the first access network device serves the first terminal device and the second terminal device, the first QoS flow belongs to a first protocol data unit PDU session, and the second QoS flow belongs to a second PDU session; and
scheduling, based on the first indication information, data transmission of the first terminal device and the second terminal device.

2. The method according to claim 1, wherein the first indication information comprises identification information of the first QoS flow and identification information of the second QoS flow, and the method further comprises:
receiving, from the core network device, configuration information of the first QoS flow and configuration information of the second QoS flow.

3. The method according to claim 2, wherein the identification information of the first QoS flow is a quality of service flow identifier QFI, and the identification information of the second QoS flow is a QFI.

4. The method according to claim 1, wherein the first indication information comprises configuration information of the first QoS flow and a QFI of the second QoS flow.

5. The method according to claim 1, wherein the first indication information comprises an identifier of the first PDU session and an identifier of the second PDU session, and the method further comprises:
receiving, from the core network device, configuration information of the first QoS flow and configuration information of the second QoS flow, wherein a QFI of the first QoS flow is the same as a QFI of the second QoS flow.

6. The method according to claim 1, wherein the first indication information comprises configuration information of the first PDU session and an identifier of the second PDU session, and a QFI of the first QoS flow is the same as a QFI of the second QoS flow.

7. The method according to claim 1, wherein the first indication information comprises an identifier of the first terminal device and an identifier of the second terminal device.

8. The method according to claim 7, wherein the method further comprises:
receiving, from the core network device, configuration information of the first QoS flow and configuration information of the second QoS flow, wherein a QFI of the first QoS flow is the same as a QFI of the second QoS flow, and an identifier of the first PDU session is the same as an identifier of the second PDU session.

9. The method according to claim 7, wherein the method further comprises:
receiving, from the core network device, configuration information of the first QoS flow and configuration information of the second QoS flow, wherein an index value comprised in the configuration information of the first QoS flow is the same as an index value comprised in the configuration information of the second QoS flow.

10. The method according to claim 7, wherein the method further comprises:
receiving, from the core network device, configuration information of the first PDU session and configuration information of the second PDU session, wherein an index value comprised in the configuration information of the first PDU session is the same as an index value comprised in the configuration information of the second PDU session, and a QFI of the first QoS flow is the same as a QFI of the second QoS flow.

11. The method according to claim 7, wherein the method further comprises:
receiving, from the core network device, configuration information of the first PDU session and configuration information of the second PDU session, wherein the configuration information of the first PDU session comprises configuration information of the first QoS flow, the configuration information of the second PDU session comprises configuration information of the second QoS flow, an index value comprised in the configuration information of the first PDU session is the same as an index value comprised in the configuration information of the second PDU session, and an index value comprised in the configuration information of the first QoS flow is the same as an index value comprised in the configuration information of the second QoS flow.

12. The method according to claim 1, wherein the first indication information comprises configuration information of the first QoS flow and configuration information of the second QoS flow, and an index value comprised in the configuration information of the first QoS flow is the same as an index value comprised in the configuration information of the second QoS flow.

13. The method according to claim 1, wherein the first indication information comprises configuration information of the first PDU session and configuration information of the second PDU session, an index value comprised in the configuration information of the first PDU session is the same as an index value comprised in the configuration information of the second PDU session, and a QFI of the first QoS flow is the same as a QFI of the second QoS flow.

14. The method according to claim 1, wherein the first indication information comprises configuration information of the first PDU session and configuration information of the second PDU session, the configuration information of the first PDU session comprises configuration information of the first QoS flow, the configuration information of the second PDU session comprises configuration information of the second QoS flow, an index value comprised in the configuration information of the first PDU session is the same as an index value comprised in the configuration information of the second PDU session, and an index value comprised in the configuration information of the first QoS flow is the same as an index value comprised in the configuration information of the second QoS flow.

15. The method according to any one of claims 1 to 14, wherein that a first QoS flow has an association relationship with a second QoS flow specifically comprises: a data packet transmitted by using the first QoS flow and a data packet transmitted by using the second QoS flow are different types of data packets that have a same source; a data packet transmitted by using the first QoS flow and a data packet transmitted by using the second QoS flow are a same data packet; or a data packet transmitted by using the first QoS flow and a data packet transmitted by using the second QoS flow have same QoS guarantee.

16. A data transmission method, wherein the method is applied to a first access network device or a chip in the first access network device, and the method comprises:
receiving first indication information from a core network device, wherein the first indication information indicates that a first quality of service QoS flow of a first terminal device has an association relationship with a second QoS flow of a second terminal device, the first access network device serves the first terminal device, a second access network device serves the second terminal device, the first QoS flow belongs to a first protocol data unit PDU session, and the second QoS flow belongs to a second PDU session; and
sending second indication information to the second access network device, wherein the second indication information indicates that a data packet in the first QoS flow fails to be transmitted.

17. The method according to claim 16, wherein the first indication information comprises configuration information of the first QoS flow, and the first indication information further comprises at least one of an identifier of the second QoS flow, an identifier of the second PDU session, an identifier of the second access network device, an identifier of the second terminal device, and a first mark value.

18. The method according to claim 16 or 17, wherein that a first QoS flow has an association relationship with a second QoS flow specifically comprises: a data packet transmitted by using the first QoS flow and a data packet transmitted by using the second QoS flow are different types of data packets that have a same source; a data packet transmitted by using the first QoS flow and a data packet transmitted by using the second QoS flow are a same data packet; or a data packet transmitted by using the first QoS flow and a data packet transmitted by using the second QoS flow have same QoS guarantee.

19. A communication apparatus, comprising a module configured to perform the method according to any one of claims 1 to 15 or claims 16 to 18.

20. A communication apparatus, comprising a processor and a memory, wherein the processor is coupled to the memory, and the processor is configured to control the apparatus to implement the method according to any one of claims 1 to 15 or claims 16 to 18.

21. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 15 or claims 16 to 18 by using a logic circuit or executing code instructions.

22. A computer-readable storage medium, wherein the storage medium stores a computer program or instructions, and when the computer program or the instructions are executed by a communication apparatus, the method according to any one of claims 1 to 15 or claims 16 to 18 is implemented.

23. A computer program product, wherein the computer program product comprises instructions, and when the instructions are run by a computer, the method according to any one of claims 1 to 15 or claims 16 to 18 is implemented.
